(19) Europäisches Patentamt
European Patent Office
Office européen des brevets

(11) **EP 4 534 618 A1**

(12) **EUROPEAN PATENT APPLICATION**

(43) Date of publication:
**09.04.2025 Bulletin 2025/15**

(21) Application number: **23383014.0**

(22) Date of filing: **03.10.2023**

(51) International Patent Classification (IPC):
**C09D 175/06** (2006.01)    **C09D 175/04** (2006.01)
**B29C 45/00** (2006.01)    **B29C 45/16** (2006.01)

(52) Cooperative Patent Classification (CPC):
**C09D 175/06; B29C 45/0001; B29C 45/1679;
C09D 175/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SABIC Global Technologies B.V.
4612 PX Bergen op Zoom (NL)**

(72) Inventors:
• **VAN DER WAL, Ronald
6160 GA Geleen (NL)**
• **DEL AGUA HERNANDEZ, David
6160 GA Geleen (NL)**
• **BOVEN, Gert
6160 GA Geleen (NL)**
• **BRUSS, Erhard
6160 GA Geleen (NL)**

(74) Representative: **Algemeen Octrooi- en
Merkenbureau B.V.
P.O. Box 645
5600 AP Eindhoven (NL)**

(54) **COATED ARTICLE**

(57) The present invention relates to an article comprising a carrier provided at least in part with a coating layer, wherein i) said carrier comprises or consists of a thermoplastic composition, said thermoplastic composition comprising polycarbonate, ii) said coating layer is applied directly on said carrier and comprises or consists of polyurethane obtained by reacting at least one di-or-tri-isocyanate and at least one polyol, iii) said polycarbonate comprises, based on the weight of the polycarbonate, at least 50 wt.% of a first polycarbonate having a terminal hydroxyl content of at least 500 ppm.

EP 4 534 618 A1

**Description**

The present invention relates to a coated article. More in particular the present invention relates to an article comprising a carrier and a polyurethane coating layer applied directly on at least part of said carrier, wherein said carrier comprises or consists of a thermoplastic composition comprising polycarbonate.

Polycarbonate or polycarbonate based compositions are well known for their use in automotive applications, both exterior and interior. In order to protect such articles from scratching, weathering or chemicals a protective coating is typically applied. For example, head-lenses made out of polycarbonate are generally provided with a hardcoat of a few micrometers thick. Typically these are acrylic or siloxane based coatings.

In the automotive industry new requirements and standards are being put in place relating to the impact properties of front panels of automotive vehicles, in particular electric automotive vehicles. These requirements specify that front parts, such as front panels, should cause minimal damage to humans or animals in case of an accident, i.e. upon impact with a human or animal. This may be accomplished if in the respective part formation of sharp and/or brittle parts, resulting from the impact, is avoided. Similarly front parts should not break or be damaged by the impact. To an extent these requirements are being addressed by the actual design of the panel or part, yet at least in part these requirements are also affected by the properties of the coated part or panel. Thus, it is preferred that the part or panel shows at most ductile impact failure rather than brittle impact failure.

Apart from mechanics there is also an aesthetic requirement that the coating adheres sufficiently to the carrier and does not delaminate over time. This requirement is of particular importance for interior automotive applications like interior trim bezels, such as those integrated into the console, instrument panels or door panels.

It is therefore an object of the present invention to provide for a coated article with sufficient or improved coating adhesion and/or wherein any negative effect of the coating on the mechanical properties of the carrier, i.e. the uncoated article, is reduced to a minimum or is even improved.

In the prior art interactions between polyurethane and polycarbonate has been disclosed.

US2019/0232621 discloses a multi-layer article comprising i) a dense substrate layer including a polymeric composition, wherein the polymeric composition is a blend comprising a polycarbonate polymer, a toughening component including a rubber - modified monovinylidene aromatic thermoplastic including an impact modifier, and a filler including a wollastonite and ii) a cover layer of a polyurethane bonded directly to the dense substrate layer; wherein the amount of polyester in the polymeric composition is about zero or less than about 5 weight percent. According to this reference it was found that a substrate formed of an ABS (and particularly a mass ABS ) in combination with a specified maximum amount of polycarbonate together with a wollastonite filler results in improved adhesion performance (initial adhesion and adhesion after climate ageing) when overmoulded or painted with a polyurethane layer.

US2019/0153218 discloses a composite component comprising a) a carrier composed of a thermoplastic composition comprising

    A) 55 to 75 parts by weight of at least one polymer selected from the group consisting of aromatic polycarbonate and aromatic polyester carbonate;
    B) 25 to 45 parts by weight of at least one mixture comprising at least one polybutadiene - based graft polymer prepared by emulsion, suspension or solution polymerization and at least one polybutadiene free vinyl (co) polymer; and
    C) 0.1 to 20.0 parts by weight (based in each case on the sum total of components A and B ) of at least one polymer additive, where the polybutadiene content based on the sum total of the parts by weight of components A and B is 10 % to 20 % by weight;

wherein the total content of butadiene - free vinyl (co) polymer from component B based on the sum total of the parts by weight of components A and B is 12% to 23% by weight, and where the sum total of the parts by weight of components A and B in the polycarbonate composition is normalized to 100; and b) at least one polyurethane layer selected from the group consisting of coating materials, foams and compact skins, comprising at least one poly-isocyanate component; least one polyfunctional H - active compound; and optionally at least one polyurethane additive and/ or processing aid; having a molar ratio of NCO- to H- active groups of 1:1 to 1 .1 : 1.

US 2002/01670177 discloses a polycarbonate composition comprising (A) an aromatic polycarbonate and/or polyester-carbonate (B) a graft polymer and (C) a copolymer of styrene and at least one monomer containing at least one carboxyl group, the copolymer having a weight average molecular weight, M, equal to or greater than 10,500 g/mol. According to this reference it was found that the addition of the copolymer (C) a considerable improvement in foam adhesion, in particular the foam adhesion with respect to polyurethane foams can be achieved.

US 5,688,837 discloses a method for adhering polyurethane foam to polycarbonate comprising a) providing nucleophilic reactive radicals on a polycarbonate surface, b) generating a polyurethane mix comprising at least one polyol and at least one diisocyanate, wherein said polyurethane mix exhibits an isocyanate index of greater than 82, and c) foaming the polyurethane mix on said polycarbonate surface. According to this reference the polycarbonate must have at least one type of nucleophilic reactive radical on its surface. The nucleophilic reactive radicals can be provided by processing as the polycarbonate is manufactured. Nucleophilic reactive radicals can be formed on the polycarbonate during polymerization. For example, bisphenol A polycarbonate that has been produced by a melt transesterification process contains hydroxyl nucleophilic reactive radicals.

US 2011/0027575 discloses a method for producing a composite material, comprising (i) producing a foamed polycarbonate moulding composition by injection moulding using chemical and/or physical foaming techniques, and (ii) applying a polyurethane reaction system on top of said polycarbonate moulding composition and allowing to cure.

US 2006/0151911 discloses a process for in-mold coating comprising (i) obtaining a mold having at least two cavities, (ii) molding a thermoplastic substrate in a first cavity, (iii) introducing the substrate into a second cavity, (iv) coating said substrate with lacquer, the coating being carried out under enhanced pressure and curing the lacquer. The method disclosed in this reference is said to be suitable for layer thicknesses of the lacquer in the range of from 0.01 to 3 mm.

While the prior art generally discloses articles based on materials comprising polycarbonate and which may be combined with a polyurethane coating or foam layer the prior art is silent with respect to the use of such materials in certain automotive applications, in particular the application in front panels for electrical vehicles.

To that extent the present invention relates to an article comprising a carrier provided at least in part with a coating layer, wherein

- said carrier comprises or consists of a thermoplastic composition, said thermoplastic composition comprising polycarbonate,
- said coating layer is applied directly on said carrier and comprises or consists of polyurethane obtained by reacting at least one di-or-tri-isocyanate and at least one polyol,
- said polycarbonate comprises, based on the weight of the polycarbonate, at least 50 wt.% of a first polycarbonate having a terminal hydroxyl content of at least 500 ppm, preferably at least 700 ppm, determined in accordance with the method said out herein.

Without willing to be bound to it the present inventors are of the opinion that the improved coating is obtained because part of the isocyanate groups of the two-component polyurethane coating reacts with the phenolic OH groups that are naturally present on the melt polycarbonate chains. From these bonded isocyanate groups polyurethane chains may grow forming an at least partially cross-linked coating layer that is chemically bonded to the carrier.

The carrier as referred to in the context of the present invention comprises or consists of a thermoplastic composition that contains polycarbonate and wherein the polycarbonate comprises, based on the weight of the polycarbonate, at least 50 wt.% of a first polycarbonate having a terminal hydroxyl content of at least 500ppm, preferably at least 700 ppm.

The carrier is typically obtained by moulding the thermoplastic composition such as injection moulding, extrusion moulding or compression moulding, preferably by injection moulding. Preferably the carrier consists of the thermoplastic composition. However, the carrier may also comprise further components such as compositions other than the thermoplastic composition that are in contact with the part of the carrier manufactured from the thermoplastic composition. For example, the carrier may be molded from two compositions wherein a first surface part of the carrier consists of the thermoplastic composition and another surface part does not consist of the thermoplastic composition. In the context of such an embodiment the coating layer is applied at least in part on the surface of the carrier consisting of the thermoplastic composition. Typically though, and in a preferred embodiment the carrier consists of the thermoplastic composition and is in the form of a moulded part, such as an injection moulded part in particular. The coating layer may cover the entire surface of the carrier or only part of it. For the avoidance of doubt it is to be understood that in the context of the present invention the coating layer is applied directly on the thermoplastic composition and there are no other layers between the coating layer and the thermoplastic composition. This may be achieved by applying the coating on the carrier directly after it has been manufactured in a moulding equipment.

The thermoplastic composition preferably comprises at least, based on the weight of the thermoplastic composition, 75 wt.%, more preferably at least 85wt.%, more preferably at least 95 wt.%, even more preferably at least 98 wt.% of polycarbonate.

The thermoplastic composition may further comprises a polymer selected from the group consisting of poly-ethyleneterephthalate, poly-butyleneterephthalate, acrylonitrile-butadiene-styrene copolymer, styrene-acrylonitrile copolymer, optionally functionalised polypropylene, optionally functionalised polyethylene, optionally functionalised polyolefin elastomer, (meth)acrylic acid-polybutadiene core- shell copolymers, and mixtures of at least two of the foregoing. It is however preferred that the thermoplastic composition does not comprise any polymers other than polycarbonate and optionally polymers used for imparting flame retardant behaviour such as PTFE. The thermoplastic composition may comprise known additives such as colorants, fillers, reinforcing fillers or fibers, antioxidants, UV stabilisers, mold release agents, flame retardants and the like. It is however preferred that the thermoplastic composition does not comprises an anti-static agent as these may migrate to the surface of the moulded article and, depending also on the type of anti-static agent, may negatively affect the adhesion of the polyurethane.

The polycarbonate may be a single type of polycarbonate or a mixture of at least two different types of polycarbonate. Further, the polycarbonate may be a single grade or a mixture of different grades of polycarbonate of the same type, yet of different molecular weight, and/or different manufacturing method, and/or different amount of terminal hydroxyl content, and/or different endcap level and/or different amount of Fries content. Preferably the first polycarbonate consists of one or more bisphenol A polycarbonate homopolymers. It is further preferred that the polycarbonate consists of one or more bisphenol A polycarbonate homopolymers.

Commercially available polycarbonate, in particular bisphenol A polycarbonate homopolymers, may be obtained by two distinct manufacturing methods.

In the so-called interfacial method one or more of a bisphenol, typically bisphenol A, is reacted with a carbonate source such as phosgene in a two phase liquid phase. Such two-phase system consists of an organic phase and an aqueous phase. The reaction typically takes place at the interface of the two phases where the growing polymer chains stay dissolved in the organic phase. The interfacial polymerisation is typically stopped by addition of an end-capping agent such as in particular phenolic end-capping agents like phenol, tert-butyl-phenol and para-cumyl-phenol. As a result, interfacial polycarbonate typically does not, or hardly, contain any phenolic hydroxyl groups, i.e. terminal hydroxyl groups. Notwithstanding the foregoing methods have been disclosed in the prior art to increase the amount of hydroxyl groups in interfacial polycarbonate. Such methods are disclosed for example in US 5,567,802 and 5,886,073 the contents of which are incorporated herein by reference.

In the so-called melt method, sometimes called melt transesterification method or melt polycondensation method, one or more of a bisphenol, typically bisphenol A, is reacted with a diarylcarbonate such as in particular diphenyl carbonate. This reaction is carried out in a molten phase consisting of the raw materials and optionally one or more of a catalyst. No solvent is used and the reaction medium is mono-phasic. In this method the bisphenol A reacts with the diphenyl carbonate thereby releasing phenol which is withdrawn from the reaction medium. Typically no endcapping agent is added in the melt process and accordingly the level of phenolic hydroxyl groups in melt polycarbonate is much higher as compared to interfacial polycarbonate. Apart from having a much higher phenolic hydroxyl group content melt polycarbonate is further distinct from interfacial polycarbonate in that it contains branching units as a result of Fries rearrangement reactions taking place at the relatively higher temperature at which the transesterification is carried out. The difference between "melt polycarbonate" and "interfacial polycarbonate" is well-known to a skilled person.

It is preferred that the polycarbonate in the thermoplastic composition comprises at least 75 wt.%, preferably at least 90 wt.% more preferably at least 95 wt.% of the first polycarbonate. More preferably the polycarbonate consists of the first polycarbonate, meaning that other that the first polycarbonate no further polycarbonate is present in the polycarbonate.

It is preferred that the polycarbonate in the thermoplastic composition has a terminal hydroxyl content of at least 500ppm, preferably at least 700 ppm, determined in accordance with the method said out herein. For the avoidance of doubt the term "polycarbonate" may include a mixture of polycarbonates.

The terminal hydroxyl content of the first polycarbonate and/or of polycarbonate may be at most 2500 ppm, preferably at most 2000 ppm, more preferably at most 1500 ppm or even more preferably at most 1250 ppm.

Preferably the first polycarbonate is a melt polycarbonate. More preferably the polycarbonate of the thermoplastic composition consists of melt polycarbonate.

The polycarbonate of the thermoplastic composition preferably comprises, essentially consists or consists of bisphenol A polycarbonate homopolymer(s).

The polycarbonate preferably has a melt volume rate of from 5 - 40 cm$^3$/ 10 min., preferably from 6 - 32 cm$^3$/ 10 min. such as from 10 - 26 cm$^3$/ 10 min., as measured in accordance with ISO 1133 (1.2 kg, 300°C). The first polycarbonate preferably has a melt volume rate of from 5 - 40 cm$^3$/ 10 min., preferably from 10 - 32 cm$^3$/ 10 min. as measured in accordance with ISO 1133 (1.2 kg, 300°C).

It is preferred that the polycarbonate has an endcap level (EC%) of at most 85%, preferably from 25 - 85%, more preferably from 30 to 80%, 50 to 80% or 65 to 75%, wherein the endcap level is calculated with the following Formula I

$$\%EC = 100 - \left(\frac{ppmOH \times Mn}{340000}\right) \qquad\qquad I$$

wherein %EC is the endcap level, ppmOH is the content of terminal hydroxyl groups in parts per million by weight and Mn is the number average molecular weight of the polycarbonate based on polycarbonate standards and determined using gel permeation chromatography. The content of terminal hydroxyl groups can be determined using UV spectroscopy.

Thus, the endcap level is defined as the percentage of polycarbonate chain ends which are not hydroxyl groups. For example, a polycarbonate having and endcap level of 75 mol % means that the polycarbonate has 25 mol % of chain ends that are hydroxyl end groups, which typically result from the bisphenol A monomer. The other 75 mol % of end groups do not contain a OH end group and may be phenolic or correspond to the end capping agent molecule(s).

In the embodiment where the first polycarbonate is a melt polycarbonate, the melt polycarbonate preferably has a Fries branching, or Fries content, of from 100 - 1500, such as from 400 - 1200 ppm.

Coating

The coating layer in the article of the present invention is obtained by coating the carrier with a liquid coating comprising at least one poly isocyanate and at least one polyol. The resulting coating is a polyurethane coating. The poly-isocyanate is preferably a diisocyanate or a tri-isocyanate or a mixture of di- and tri-isocyanates. A single poly-isocyanate or a mixture of different poly-isocyanates may be applied. Similarly a single polyol or a mixture of different polyols may be applied. Preferably the polyol is a diol, i.e. a compound having two hydroxyl functionalities.

Two component polyurethane coatings are known to the skilled person per se and in principle any available such coating system may be applied in the context of the present invention, the reason for this being that the present inventors consider that the concept underlying the invention is the interaction between the terminal hydroxyl groups from the polycarbonate and the isocyanate groups.

In the context of the invention the coating layer is not foamed, i.e. the coating layer is substantially free of voids provided it is acknowledged that in a typical wet coating process the (unintentional) formation of small voids or bubbles may not always be prevented.

The desired properties of the coating layer are obtained by selecting the appropriate poly-isocyanate and polyol, in addition to the isocyanate index. The isocyanate index is corresponds to the ratio of free isocyanate groups to isocyanate reactive groups such as hydroxyl groups from the polyol, amine and water, before reaction occurs. For the avoidance of doubt the terminal hydroxyl content of the polycarbonate is not taken into consideration for calculation of the isocyanate index. An isocyanate index of 1 indicates that there are the same number of equivalents of isocyanate as there are the number of equivalents of hydroxyl groups, amine groups (if any) and water (if any). Typically no amine groups and water is present. Water has two equivalents per mole, a primary amine has two and a secondary amine has one. The isocyanate index is preferably from 0.90 to 1.2, more preferably from 0.95 to 1.1. In particular for polycarbonates having a high number of terminal hydroxyl groups a somewhat higher iso-cyanate index may be preferred compared to polycarbonate with a lower amount of terminal hydroxyl groups.

The coating layer, after curing, is preferably is at least 50 $\mu$m, preferably at least 100 $\mu$m, more preferable at least 250 $\mu$m and at most 5000 $\mu$m, preferably at most 4000 $\mu$m, more preferably at most 2500 $\mu$m.

Panel

The article of the present invention is preferably an automotive interior or exterior article.

The interior article may be comprised in or constitute a dashboard, instrument panel, console, display, functional surface trims, door trims and the like.

The exterior article may be comprised in or constitute a front, side or rear panel of a vehicle.

In particular, the article may be comprised in or constitute a vehicle front panel such as a front panel of a car, a truck, or a bus. In such an application the coating layer is exposed towards the driving direction, i.e. outwards. More preferably the article is comprised in or constitutes a front panel of an electrical vehicle such as an electrical car, truck or bus. For the avoidance of doubt, the present invention is directed at the use of the article as part of or as a front panel as described above.

The present invention further relates to a vehicle, such as a fossil fuel based car, truck or bus, an electrical car, truck or bus, or an electrical and fossil fuel based hybrid car, truck or bus comprising an article in accordance with the invention disclosed herein.

Method

The present invention further relates to a method for the manufacture of the article disclosed herein, the method comprising the steps of

    i) injecting an amount of thermoplastic composition in a mould thereby forming said carrier by means of injection moulding,
    ii) cooling the injection moulded article,
    iii) applying a two-component polyurethane coating containing least one poly-isocyanate and at least one polyol directly on at least part of the injection moulded article,
    iii) curing the coating

wherein said thermoplastic composition comprises polycarbonate and said polycarbonate comprises, based on the weight of the polycarbonate, at least 50 wt.% of a first polycarbonate having a terminal hydroxyl content of at least 500ppm, preferably at least 700 ppm.

It is preferred that the cooled injection moulded article of step ii) is transferred to a second cavity and that at least step iii) is carried out in that second cavity.

It is further preferred that prior to application of the coating in step iii) at least a part of the to be coated surface of the injection moulded article is subjected to a corona or flame treatment in order to further increase the amount of hydroxyl groups on the surface of the injection moulded part.

Typically the method is carried out in a process known as a flood coating or in-mould coating process. In such a process the carrier is manufactured via injection moulding in an injection moulding equipment. After injection of the thermoplastic composition the so formed carrier is cooled until it has sufficiently solidified. Then, while the carrier is still in the mould a coating is injected to coat at least one side, or part thereof, of the carrier. This may be carried out in the same mould or preferably in a second cavity as indicated above. The coating is then cured, typically under pressure, until the carrier can be removed from the mould. After the carrier is taken from the mould the coating may or may not yet be fully cured.

The present invention will now be further elucidated based on the following non-limiting examples.

Measurement methods

| | | |
|---|---|---|
| Fries content | The amount of Fries branching was determined using an Agilent 1100series HPLC equipped with a MWD G1365B detector. The column is an Agilent Zorbax Eclipse XDB-C18 $4.6 \times 75$ mm. The injection volume is 50ml. The oven temperature is 35 $\underline{o}$C and the wavelength to acquire data is 320.16 nm. For sample preparation 0.3g of sample is dissolved in 7.5 ml of a solvents mixture based on 5 ml of tetrahydrofuran and 2.5 ml of a 10 % of potassium hydroxide solution in methanol, after heating this sample at 40$\underline{o}$C during 20 min, 1.4 ml of acetic acid is added. |
| Endcap level | The endcap level can be determined based on UV measurement to determine the amount of terminal OH groups. Combined with the number average molecular weight the endcap level is then determined in accordance with Formula I. The UV spectrophotometer was a Perkin Elmer Lambda 800. Measurements were carried out on 0.01g of a polycarbonate sample dissolved in 10 ml of dichloromethane and placed into a quartz cuvette of 10 mm of optical path. The wavelength to acquire data are 284 and 292 nm. The results from the equipment as ppm of OH are used to calculate the endcap using also the molecular weight of the polycarbonate and according to the formula for calculation as disclosed herein. In case the polycarbonate contains UV absorbing additives measurements at further wavelengths (300, 343 and 400 nm) may be required for an accurate determination of the Endcap level. |
| Melt volume rate (MVR) | The melt volume rate was determined in accordance with ISO 1133 at a temperature of 300°C and a load of 1.2 kg. |

Polycarbonate materials

Table 1 ..

| | Method of manufacture | MVR | EC% | OH [ppm] | Fries [ppm] |
|---|---|---|---|---|---|
| PC1 | Interfacial | 21 | 100 | ~ 0 | ~0 |
| PC2 | Interfacial | 21 | 100 | ~ 0 | ~0 |
| PC3 | Melt | 12 | 75 | 675 | 1050 |
| PC4 | Melt | 12 | 68 | 987 | 1126 |
| PC5 | Melt | 12 | 68 | 930 | 1258 |
| PC6 | Melt | 12 | 75 | 690 | 1050 |

(continued)

|  | Method of manufacture | MVR | EC% | OH [ppm] | Fries [ppm] |
|---|---|---|---|---|---|
| PC7 | Melt | 6 | 68 | 734 | 972 |
| PC8 | Melt | 21 | 66 | 1050 | 960 |
|  |  |  |  |  |  |

All polycarbonates PC1 - PC5 are bisphenol A polycarbonate homopolymers.

Coating adhesion

The polycarbonates PC1 - PC5 were molded into plaques with a thickness of 3 mm after which a 2-component polyurethane coating was applied. The polyurethane coating was Puroclear 3351iT available from the company Rühl. This coating is a two-component polyurethane coating comprising a polyester polyol and an isocyanate wherein the weight ratio of polyol to isocyanate is 100: 230. The cured coating had a thickness of 0.6 mm.

Next the so obtained coated articles were subjected to a so-called Positest in accordance with the standard ISO 4624 Method B (3rd Edition, 2016) using a Dolly with a diameter of 20mm and an applied tensile stress speed of 0,7 MPa/s. The adhesive that was used was LORD 406E/17 acrylic adhesive. The tests were carried out room temperature of 23 +/- 2 °C and a relative humidity of 50 +/- 5%. The Positest, as known to the skilled person, is used to test the adhesion of a coating to a substrate.

The Positest was carried out on the coated articles after the coating was fully cured, which typically meant after about 24 hours, but before the samples were aged. Another Positest was carried out on samples obtained by subjecting the coated and fully cured articles to an aging cycle in accordance with the BMW PR 303.5b climate test. This climate test comprises exposing, in cycles, the articles to temperatures within a range of -30°C to 80 °C cycles and at different relative humidity conditions. The total duration of the cycles is 240 hours. The BMW PR 303.5b climate test is well-known to the skilled person.

The results of the test are shown in Table 2

Table 2

|  |  | Positest break energy [MPa] | |
|---|---|---|---|
|  |  | Before aging | After aging |
| CE1 | PC1 | 2.66 | 0 |
| CE2 | PC2 | 2.55 | 0 |
| E1 | PC3 | 7.4 | 0.8 |
| E2 | PC4 | 7.7 | 2 |
| E3 | PC5 | 7.3 | 4.46 |

The results as presented in Table 2 show that polycarbonate articles having a relatively high amount of terminal hydroxyl content show an improved adhesion to 2 component polyurethane coatings based on isocyanate and polyol monomers. The positive effect is see both before and after aging. The reason for the difference in Positest results after aging for PC4 and PC5 is not entirely clear to the present inventors. A possible explanation might relate to the difference in Fries content for these polycarbonates.

In a further example several polycarbonate plaques were provided with a 2-component polyurethane coating based on isocyanate and polyol monomers. The coating was Puroclear 3098-4IT commercially available from the company Rühl and was applied such that the thickness of the coating layer after curing was 0.6mm. After curing the peel strength of the coating was measured in accordance with ASTM D3167. The results are presented in Table 3 below

Table 3

|  | material | Cooling time after moulding and before coating [s] | SABIC Average peel strength |
|---|---|---|---|
| E4 | PC6 | 15 | 19.4 |
| E5 | PC6 | 45 | 12.1 |

(continued)

|    | material | Cooling time after moulding and before coating [s] | SABIC Average peel strength |
|----|----------|---------------------------------------------------|----------------------------|
| E6 | PC7      | 20                                                | 21.8                       |
| E7 | PC7      | 45                                                | 21.6                       |
| E8 | PC8      | 15                                                | 22.7                       |
| E9 | PC8      | 45                                                | 22.1                       |

The present inventors found that when interfacial polycarbonates were uses, with no or negligible terminal hydroxyl groups, no peel strength could be determined.

The data in this table show that a lower endcap level (EC%) and accordingly a higher content of terminal hydroxyl groups leads to an increased peel strength. The data further suggests that below a content of terminal hydroxy groups of about 700ppm the cooling time of the injection moulded sample before being coated is of less relevance. The reason for this effect is not entirely clear. It may also be appreciated that the coating adhesion is less when the polycarbonate moulding is cooled for a longer time.

The present inventors also tried to perform the peel test using polycarbonate manufactured with an interfacial process, i.e. a polycarbonate which is fully end-capped. The coating came off very easily and as a result no peel strength could be measured.

Apart from the improved adhesion the present inventors also found that, compared to polycarbonate moldings provided with a hard-coat or UV cured coatings, such as traditional acrylic or siloxane coatings, the impact properties of the articles in accordance with the invention were improved. This finding is based on the testing of several samples with a so called "drop tower test-protocol" in accordance with ISO 6603-A, where the coated side was the side of the impact. In particular the present inventors found that the impact of 3.6mm thick polycarbonate panels prepared from melt polycarbonate with a MVR of 21 cm3/ 10 min and endcap level of 75% and a Fries content of 1050 ppm coated with the same coating as per examples E1 - E3 showed ductile failure at most in the impact test. No brittle failures were observed. To the contrary, comparable articles provided with a hard-coat coating layer or with a UV cured coating layer showed only brittle failures. This aspect is of high importance for use of the coated articles as front panels for (electrical) vehicles.

**Claims**

1.  Article comprising a carrier provided at least in part with a coating layer, wherein

    - said carrier comprises or consists of a thermoplastic composition, said thermoplastic composition comprising polycarbonate,
    - said coating layer is applied directly on said carrier and comprises or consists of polyurethane obtained by reacting at least one poly-isocyanate and at least one polyol,
    - said polycarbonate comprises, based on the weight of the polycarbonate, at least 50 wt.% of a first polycarbonate having a terminal hydroxyl content of at least 500ppm, preferably at least 700 ppm, determined in accordance with the method said out in the description.

2.  The article of claim 1 wherein the polycarbonate comprises at least 75 wt.%, preferably at least 90 wt.% more preferably at least 95 wt.% of said first polycarbonate.

3.  The article of claim 1 or 2 wherein the first polycarbonate is a melt polycarbonate.

4.  The article of any one or more of claims 1 - 3 wherein the polycarbonate has a melt volume rate of from 5-40 cm$^3$/ 10 min. as measured in accordance with ISO 1133 (1.2 kg, 300°C).

5.  The article of any one or more of claims 1 - 5 wherein the thermoplastic composition comprises at least 95 wt.%, preferably at least 98 wt.% of polycarbonate based on the weight of the thermoplastic composition.

6.  The article of any one or more of claims 1 - 6 wherein the polycarbonate composition essentially consists of bisphenol A polycarbonate homopolymer.

7.  The article of any one or more of claims 1 - 7 wherein the thermoplastic composition does not comprise an anti-static agent.

8. The article of any one or more of claims 1 - 8 wherein the polyurethane has an isocyanate index, as defined in the specification, of from 0.90 - 1.2 preferably from 0.95-1.1.

9. The article of any one or more of claims 1 - 8 wherein the poly-isocyanate is a diisocyanate or a tri-isocyanate.

10. The article of any one or more of claims 1 - 9 wherein the coating thickness, determined after curing, is at least 50 $\mu$m, preferably at least 100 $\mu$m, more preferable at least 250 $\mu$m and at most 5000 $\mu$m, preferably at most 4000 $\mu$m, more preferably at most 2500 $\mu$m.

11. The article of any one or more of claims 1-10 wherein the article is a vehicle interior or exterior article.

12. A front panel of an electrical vehicle comprising or consisting of the article of any one or more of claims 1-11.

13. Vehicle, preferably an electrical vehicle, comprising a front panel comprising or consisting of the article of any one or more of claims 1 - 11, said front panel being a panel facing the forward direction of the vehicle.

14. Method for the manufacture of the article of any one or more of claims 1 - 11 comprising the steps of

i) injecting an amount of thermoplastic composition in a mould thereby forming said carrier by means of injection moulding,
ii) cooling the injection moulded article,
iii) applying a two-component polyurethane coating containing least one poly-isocyanate and at least one polyol directly on at least part of the injection moulded article,
iii) curing the coating

wherein,
said thermoplastic composition comprises polycarbonate and said polycarbonate comprises, based on the weight of the polycarbonate, at least 50 wt.% of a first polycarbonate having a terminal hydroxyl content of at least 500ppm, preferably at least 700 ppm.

15. The method of claim 14 further comprising the step of transferring the cooled injection moulded article of step ii) to a second cavity prior to application of the coating in step iii).

**EUROPEAN SEARCH REPORT**

Application Number

EP 23 38 3014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2011/070044 A1 (BAYER MATERIALSCIENCE AG [DE]; ECKEL THOMAS [DE] ET AL.) 16 June 2011 (2011-06-16) * page 1, lines 4-7 * * page 3, lines 1-26 * * page 10, line 1 - page 11, line 10; claims; figure 1; examples * | 1-15 | INV. C09D175/06 C09D175/04 B29C45/00 B29C45/16 |
| A | EP 2 216 353 A1 (BAYER MATERIALSCIENCE AG [DE]) 11 August 2010 (2010-08-11) * paragraphs [0001], [0012] - [0014], [0067] - [0075]; claims; examples * | 1-15 | |
| A | EP 4 015 580 A1 (COVESTRO DEUTSCHLAND AG [DE]) 22 June 2022 (2022-06-22) * paragraphs [0001], [0024], [0025], [0035], [0040]; claims; examples * | 1-15 | |
| E | WO 2024/017706 A1 (COVESTRO DEUTSCHLAND AG [DE]) 25 January 2024 (2024-01-25)   * page 1, lines 4-9 * * page 4, line 8 - page 5, line 17; claims; examples 2, 5 * | 1-7, 9-11, 13-15 | TECHNICAL FIELDS SEARCHED (IPC) C09D B29C |
| E | EP 4 309 865 A1 (COVESTRO DEUTSCHLAND AG [DE]) 24 January 2024 (2024-01-24) * paragraphs [0001], [0013] - [0015], [0034], [0049]; claim 10; examples * | 1 | |

The present search report has been drawn up for all claims

| Place of search | Date of completion of the search | Examiner |
|---|---|---|
| Munich | 7 March 2024 | Eigner, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 38 3014**

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2024

| Patent document cited in search report | Publication date | Patent family member(s) | Publication date |
|---|---|---|---|
| WO 2011070044 A1 | 16-06-2011 | BR 112012013711 A2 | 15-03-2016 |
| | | CA 2782998 A1 | 16-06-2011 |
| | | CN 102762372 A | 31-10-2012 |
| | | EP 2509788 A1 | 17-10-2012 |
| | | JP 5931739 B2 | 08-06-2016 |
| | | JP 2013512805 A | 18-04-2013 |
| | | KR 20120101527 A | 13-09-2012 |
| | | MX 341901 B | 06-09-2016 |
| | | TW 201136759 A | 01-11-2011 |
| | | US 2011159292 A1 | 30-06-2011 |
| | | WO 2011070044 A1 | 16-06-2011 |
| EP 2216353 A1 | 11-08-2010 | CN 102317334 A | 11-01-2012 |
| | | EP 2216353 A1 | 11-08-2010 |
| | | EP 2396357 A1 | 21-12-2011 |
| | | JP 2012517489 A | 02-08-2012 |
| | | KR 20110119694 A | 02-11-2011 |
| | | US 2012059118 A1 | 08-03-2012 |
| | | WO 2010091823 A1 | 19-08-2010 |
| | | WO 2010091898 A1 | 19-08-2010 |
| EP 4015580 A1 | 22-06-2022 | CN 117157359 A | 01-12-2023 |
| | | EP 4015580 A1 | 22-06-2022 |
| | | EP 4263709 A1 | 25-10-2023 |
| | | WO 2022128837 A1 | 23-06-2022 |
| WO 2024017706 A1 | 25-01-2024 | NONE | |
| EP 4309865 A1 | 24-01-2024 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190232621 A
- US 20190153218 A
- US 200201670177 A
- US 5688837 A
- US 20110027575 A
- US 20060151911 A
- US 5567802 A
- US 5886073 A

**Non-patent literature cited in the description**

- ISO 4624 Method B. 2016